# EUROPÄISCHE PATENTSCHRIFT

(11) **EP 1 453 375 B1**
(45) Veröffentlichungstag und Bekanntmachung des Hinweises auf die Patenterteilung: **18.05.2005**
(21) Anmeldenummer: 02787813.1
(22) Anmeldetag: 26.11.2002
(51) Int. Cl.: A01K 5/02, A61L 2/10, B01F 15/00, A23K 3/00

(54) **FÜTTERUNGSEINRICHTUNG**
FEEDING DEVICE
DISPOSITIF D'AFFOURAGEMENT

(30) Priorität: 14.12.2001 DE 20120281 U
(43) Veröffentlichungstag der Anmeldung: 08.09.2004
(73) Patentinhaber: WEDA-DAMMANN & WESTERKAMP GmbH, 49424 Lutten (DE)
(72) Erfinder: KL. SEXTRO, Franz-Josef, 49377 Vechta (DE)
(74) Vertreter: Busse, Dietrich
(86) Internationale Anmeldenummer: PCT/EP2002/013258
(87) Internationale Veröffentlichungsnummer: WO 2003/051107

(56) Entgegenhaltungen:
- WO-A-01/72143
- DE-A- 4 403 795
- DE-A- 10 008 512
- FR-A- 2 551 956
- GB-A- 1 187 632
- US-A- 3 233 590
- US-A- 3 473 516
- DATABASE WPI Week 198934 Derwent Publications Ltd., London, GB; AN 1989-246990 XP002229702 & SU 1 440 461 A (KOVALEV), 30. November 1988 (1988-11-30)

## Beschreibung

Die Erfindung bezieht sich auf eine Fütterungseinrichtung mit einem Futteranmischbehälter, wie er insbesondere für Flüssigfutteranlagen zur Anwendung kommt. Futteranmischbehälter dieser Art verfügen über ein Rührwerk zur Vermischung der zugeführten Futterbestandteile sowie zum Umwälzen der Futtermasse im Behälter und sind in der Regel oberseitig durch einen ganz oder teilweise abnehmbaren oder aufklappbaren Deckel verschlossen. An den Futteranmischbehälter schließen sich Förderleitungen zu Verbraucherstellen an.

Die Druckschrift US-A-3 473 516 offenbart eine solche Fütterungseinrichtung mit einer UV-Bestrahlungsquelle zur Bestrahlung des Futters.

Die Erfindung befaßt sich mit dem Problem, die hygienischen Bedingungen im Futter im Behälter vor, bei und/oder nach einer Futterbearbeitung zu verbessern. Die Erfindung löst dieses Problem durch eine Fütterungseinrichtung mit den Merkmalen des Anspruchs 1. Hinsichtlich weiterer Ausgestaltungen wird auf die Ansprüche 2 bis 18 verwiesen.

Die Fütterungseinrichtung nach der Erfindung ermöglicht es, nach einem Reinigungsvorgang den Behälterinnenraum durch Keimabtötung vollständig oder weitgehend zu sterilisieren. Ein solcher Sterilisationsvorgang kann auch vor Beginn eines Anmischvorganges durchgeführt werden, um während Ruhezeiten im leeren Behälter zurückgebliebene und der Vermehrung unterliegende Keime abzutöten. Schließlich und insbesondere kann eine solche keimabtötende Behandlung auch während eines Futteranmischvorganges zur Durchführung kommen, um Keimzahlen in Futterbestandteilen zu verringern. Eine Behandlung von fertig zubereiteten Futtermischungen im Behälter kann während Ruhephasen sinnvoll sein, um das Anwachsen von Keimzahlen zu verzögern oder zu unterbinden.

Weitere Einzelheiten und Wirkungen ergeben sich aus der nachfolgenden Beschreibung und der Zeichnung, in der mehrere Ausführungsbeispiele des Gegenstands der Erfindung näher veranschaulicht sind. In der Zeichnung zeigen:
- Fig. 1: eine Gesamtansicht einer Fütterungseinrichtung mit einem Futteranmischbehälter nach der Erfindung,
- Fig. 2: einen Futteranmischbehälter abgewandelter Ausbildung, und
- Fig. 3: eine Fütterungseinrichtung mit einem Futteranmischbehälter mit nachgeschalteter Futterdurchlauf-Kammer.

Die in der Zeichnung veranschaulichte Fütterungseinrichtung, insbesondere Flüssigfütterungsanlage, umfaßt Silos 1 für Futterbestandteile, von denen lediglich einer veranschaulicht ist. Aus diesen Silos 1 werden Futterbestandteile mittels einer Fördervorrichtung 2 in einen Futteranmischbehälter 3 gefördert, der ein Rührwerk 4 aufweist und am unteren Ende seines trichterförmigen Bodens 5 mit einer Förderleitung 6 versehen ist, durch die mittels einer Pumpe 7 eine fertig zubereitete Futtermischung über Vorlaufleitungen 8,9,10 zu Verbraucherplätzen gepumpt werden kann.

Die Förderleitung 6 kann mit einem Teil 11 zum Futteranmischbehälter 3 rückgeführt sein, um gewünschtenfalls ein Umpumpen von Futter vornehmen zu können. Die Vorlaufleitungen 8,9,10 sind bevorzugt als Ringleitungen ausgebildet, die an ihrem Ende in eine Sammelleitung 12 münden, die ihrerseits zum Futteranmischbehälter 3 zurückgeführt ist. Gesteuert wird die Fütterungsanlage von einem Zentralcomputer 13, der ein zentrales Steuergerät 14 beaufschlagt.

Neben den Futterbestandteilen ist der Futteranmischbehälter 3 auch mittels Zuleitungen 15 mit Wasser oder sonstigen flüssigen Bestandteilen wie Molke beschickbar.

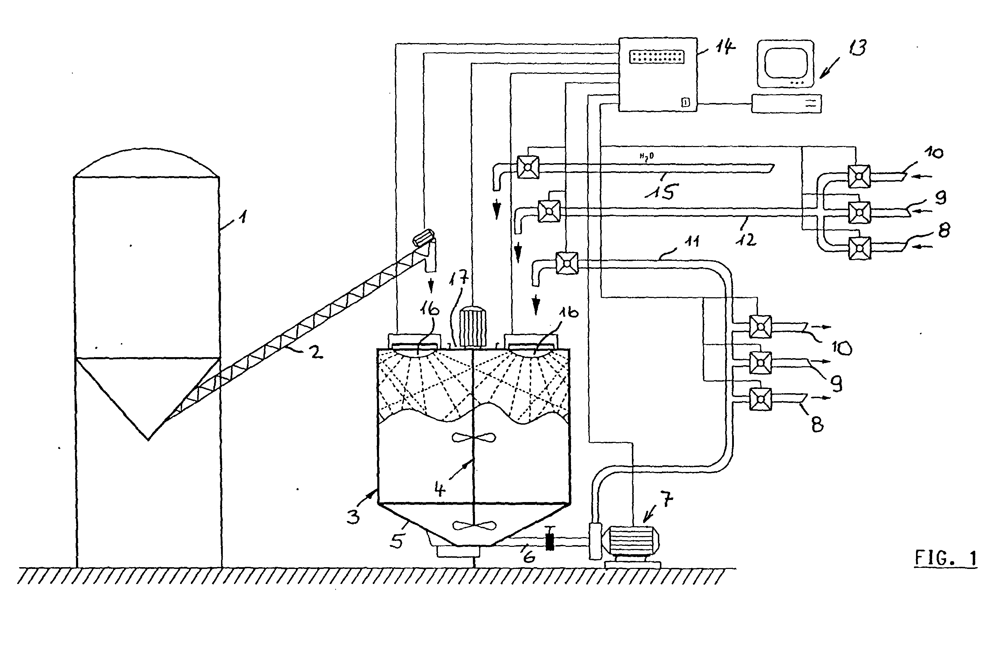

Der Futteranmischbehälter 3 ist mit zumindest einer, vorzugsweise aber mehreren UV-Strahlenquellen 16 für eine UV-Bestrahlung der Innenflächen des Futteranmischbehälters 3 und der Oberfläche im Innenraum des Futteranmischbehälters 3 etwa vorhandenen Futters versehen. Die UV-Strahlenquellen 16 sind bei der Ausführung nach Fig. 1 am Deckel 17 des Futteranmischbehälters angeordnet, wobei die UV-Strahlenquellen 16 bevorzugt in regelmäßigem gegenseitigen Abstand um die vertikale Behältermittelachse herum angeordnet sind. Die UV-Bestrahlung, die bevorzugt im Wellenlängenbereich von etwa 240 bis 280 Nanometer, vorzugsweise etwa 254 Nanometer, liegt, hat eine Keimabtötung zur Folge, so daß vor, im und nach dem Betrieb des Futteranmischbehälters 3 in diesem und ggf. in der Futtermischung vorhandene Keime reduziert oder eliminiert werden, soweit sie von der UV-Strahlung erfaßt werden.

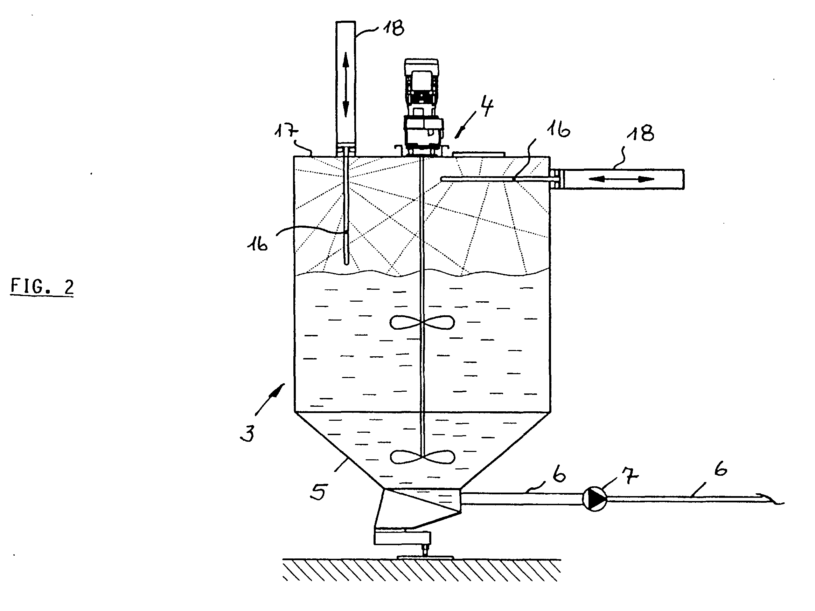

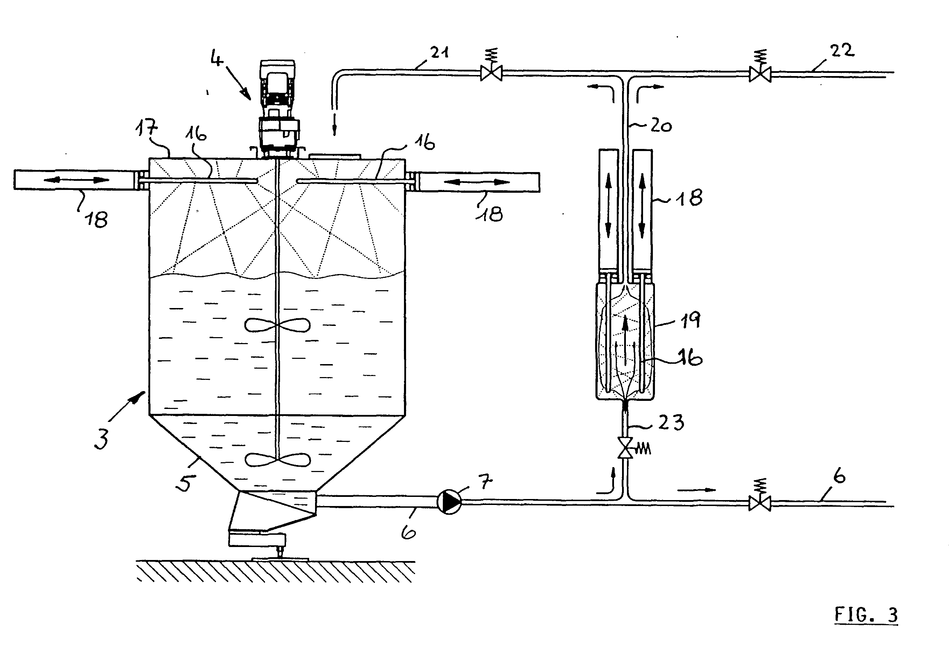

Statt einer Anbringung der UV-Strahlenquellen am Deckel 17 können diese auch im oberen Bereich der Behälterseitenwand vorgesehen sein, wie dies in Fig. 2 in einer Kombination mit einer am Deckel 17 angebrachten UV-Strahlenquelle und wie dies in Fig. 3 dargestellt ist.

In Abwandlung von den UV-Strahlenquellen 16 in Fig. 1 haben die UV-Strahlenquellen 16 in Fig. 2 und 3 die Gestalt eines Stabkörpers, der mittels eines Druckmittelzylinders 18 aus einer Betriebsstellung innerhalb des Futteranmischbehälters 3 in eine Außerbetriebsstellung bewegbar sein kann, in der er sich zumindest teilweise außerhalb des Behälterinnenraumes befindet. Die Leistung jedes Stabkörpers bzw. jeder Strahlungsquelle liegt zweckmäßig im Bereich von etwa 30 bis 40 Watt, vorzugsweise etwa 36 Watt. Anstelle von Druckmittelzylindern sind auch sonst geeignete Antriebsmittel einsetzbar. Die in Fig. 2 und 3 dargestellten UV-Strahlenquellen 16 sind hierzu in horizontaler und/oder vertikaler Richtung zwischen ihrer Betriebs- und ihrer Außerbetriebsstellung verschieblich.

Der Futteranmischbehälter 3 ist im Wanddurchgangsbereich für eine UV-Strahlenquelle16 mit einer Dichtung (nicht dargestellt) versehen, die bei Bewegung der UV-Strahlenquelle 16 in ihre Außerbetriebsstellung als Abstreifer wirkt und eine Reinigungsfunktion erfüllt. Jeder UV-Strahlenquelle 16 kann innerhalb oder außerhalb des Futteranmischbehälters 3 auch noch eine gesonderte, z.B. von Wassersprühköpfen gebildete Reinigungsvorrichtung (nicht dargestellt) zugeordnet sein, um Verschmutzungen zu beseitigen, die sich im Betrieb gegebenenfalls gebildet haben. In besonderen Fällen kann zur Vermeidung von Verschmutzungen auch vorgesehen sein, daß die UV-Strahlenquellen 16 in der Betrieb- oder Außerbetriebstellung durch eine Abdeckung von der Umgebung abkapsel- bzw. abschirmbar sind. Zum Schutz vor mechanischen Beeinträchtigungen ist die UV-Strahlungsquelle, z. B. die Stabkörper, mit einer Quarzglas-Abdeckung bzw. Umhüllung versehen, die UV-Strahlung ungefiltert durchläßt.

Zur Verstärkung der Wirkung der UV-Bestrahlung auf das Futter kann dem Futteranmischbehälter 3 eine Futterdurchlauf-Kammer 19 nachgeordnet sein, die von der Förderleitung 6 her mit Futter im Durchlauf beschickbar ist. Bei der Anordnung gemäß Fig. 3 hat die Futterdurchlauf-Kammer 19 an ihrer Abströmseite eine Förderleitung 20, die eine Rücklaufleitung 21 zum Futteranmischbehälter 3 oder eine zu Verbraucherplätzen führende Förderleitung 22 beaufschlagen kann. Auf ihrer Beschickungsseite ist die Futterdurchlauf-Kammer 19 an eine Abzweigleitung 23 zur Förderleitung 6 angeschlossen. Entsprechend dieser Anordnung kann die Futterdurchlauf-Kammer 19 während eines Umpumpens von Futter über die Leitungen 6,23,20,21 mit Futter beaufschlagt werden. Ferner kann sie bei der Beschickung von Verbraucherplätzen mit Futter über die Leitungen 6,23,20,22 beaufschlagt werden. Sie kann jedoch auch bei einer Beschickung der Verbraucherplätze aus dem Betrieb herausgenommen werden.

Die Futterdurchlauf-Kammer 19 ist in ihrem Innenraum mit zumindest einer, vorzugsweise aber mehreren UV-Strahlenquellen 16 versehen, die axial aus dem Gehäuse mittels des Druckmittelantriebs 18 in eine Außerbetriebsstellung herausbewegbar sind.

Mit Hilfe der Futterdurchlauf-Kammer 19 kann eine zusätzliche Futterbestrahlung mit UV-Licht vorgenommen werden, durch die die Einwirkung des UV-Lichtes auf das Futter verstärkt wird.

Zur Feststellung des Einwirkungserfolges der UV-Strahlenquellen 16 können der Fütterungseinrichtung, z. B. dem Futteranmischbehälter 3 nicht, dargestellte Meßsonden zugeordnet sein, durch die beispielsweise die Temperatur, der pH-Wert des Futters, die Keimzahlen pro Volumeneinheit und ähnliche Werte ermittelbar ist, was Rückschlüsse auf den Erfolg der Bestrahlung zuläßt. Dabei sind die Meßsonden an den Zentralcomputer 13 angeschlossen.

## Patentansprüche

1. Fütterungseinrichtung mit einem Futteranmischbehälter, insbesondere für Flüssigfutteranlagen, mit einem Rührwerk (4) zur Vermischung von Futterbestandteilen und zum Umwälzen von Futter und mit einer UV-Strahlenquelle zur Futterbestrahlung, **dadurch gekennzeichnet, daß** zur UV-Bestrahlung der Behälterinnenflächen und der Oberfläche im Futteranmischbehälter (3) etwa vorhandenen Futters zumindest eine UV-Strahlenquelle (16) im innern des Futteranmischbehälters (3) vorgesehen ist, die eine UV-Strahlung im Bereich von etwa 240 bis 280 Nanometer abgibt, eine Leistungsaufnahme von etwa 30 bis 40 Watt hat und mit einer Quarzglas-Schutzabdeckung versehen ist.

2. Fütterungseinrichtung nach Anspruch 1, **dadurch gekennzeichnet, daß** mehrere UV-Strahlenquellen (16) vorgesehen sind.

3. Fütterungseinrichtung nach Anspruch 1 oder 2, **dadurch gekennzeichnet, daß** die UV-Strahlenquelle(n) (16) am Behälterdeckel (17) vorgesehen ist bzw. sind.

4. Fütterungseinrichtung nach einem der Ansprüche 1 bis 3, **dadurch gekennzeichnet, daß** die UV-Strahlenquelle(n) (16) im oberen Bereich der Behälterseitenwand vorgesehen ist bzw. sind.

5. Fütterungseinrichtung nach einem der Ansprüche 2 bis 4, **dadurch gekennzeichnet, daß** die UV-Strahlenquellen (16) in regelmäßigem gegenseiti-gen Abstand um die vertikale Behältermittelachse herum angeordnet sind.

6. Fütterungseinrichtung nach einem der Ansprüche 1 bis 5, **dadurch gekennzeichnet, daß** die UV-Strahlenquelle(n) (16) aus einer Betriebsstellung innerhalb des Futteranmischbehälters (3) in eine Außerbetriebsstellung zumindest teilweise außerhalb des Behälterinnenraumes bewegbar ist bzw. sind.

7. Fütterungseinrichtung nach Anspruch 6, **dadurch gekennzeichnet, daß** der Futteranmischbehälter (3) im Wanddurchgangsbereich für eine UV-Strahlenquelle (16) mit einer Dichtung versehen ist, die bei Bewegung der UV-Strahlenquelle (16) in ihre Außerbetriebsstellung als Abstreifer wirkt.

8. Fütterungseinrichtung nach Anspruch 6 oder 7, **dadurch gekennzeichnet, daß** jeder UV-Strahlenquelle (16) innerhalb oder außerhalb des Futteranmischbehälters (3) eine gesonderte Reinigungsvorrichtung zugeordnet ist.

9. Fütterungseinrichtung nach einem der Ansprüche 6 bis 8, **dadurch gekennzeichnet, daß** die UV-Strahlenquelle(n) (16) in horizontaler oder vertikaler Richtung zwischen der Betriebs- und der Außerbetriebsstellung verschieblich ist bzw. sind.

10. Fütterungseinrichtung nach einem der Ansprüche 1 bis 9, **dadurch gekennzeichnet, daß** die UV-Strahlenquelle(n) (16) in der Betriebs- oder Außerbetriebsstellung durch eine Abdeckung von der Umgebung abkapselbar sind.

11. Fütterungseinrichtung nach einem der Ansprüche 1 bis 10, **dadurch gekennzeichnet, daß** die UV-Strahlenquelle (16) als Stabkörper ausgebildet ist.

12. Fütterungseinrichtung nach einem der Ansprüche 1 bis 11, **dadurch gekennzeichnet, daß** die UV-Strahlenquelle(n) (16) eine UV-Strahlung im Bereich von etwa 254 Nanometer abgibt.

13. Fütterungseinrichtung nach einem der Ansprüche 1 bis 12, **dadurch gekennzeichnet, daß** die UV-Strahlenquelle(n) (16) eine Leistungsaufnahme von etwa 36 Watt haben.

14. Fütterungseinrichtung nach einem der Ansprüche 1 bis 4, **dadurch gekennzeichnet, daß** dem Futteranmischbehälter (3) eine Futterdurchlauf-Kammer (19) nachgeordnet ist, die von einer aus dem Bodenbereich (5) des Futteranmischbehälters (3) ausmündenden, mit einer Pumpe (7) versehenen Förderleitung (6) mit Futter im Durchlauf beschickbar und zumindest mit einer im Inneren der Kammer wirksamen UV-Strahlenquelle (16) versehen ist.

15. Fütterungseinrichtung nach Anspruch 14, **dadurch gekennzeichnet, daß** die Futterdurchlauf-Kammer an ihrer Abströmseite an eine Förderleitung (20) angeschlossen ist, die wahlweise eine Rücklaufleitung (21) zum Futteranmischbehälter (3) oder eine zu den Verbraucherplätzen führende Förderleitung beaufschlagt.

16. Fütterungseinrichtung nach Anspruch 14, **dadurch gekennzeichnet, daß** die Futterdurchlauf-Kammer (19) an eine Abzweigleitung (23) zu der direkt zu Verbraucherplätzen führenden Förderleitung (6) für Futter angeschlossen ist.

17. Fütterungseinrichtung nach einem der Ansprüche 1 bis 16, **dadurch gekennzeichnet, daß** die UV-Strahlenquelle(n) (16) mittels eines Zentralcomputers (13) gesteuert ist bzw. sind, der auch den Futteranmischbehälter (3), seine Bestandteile (4) und seine Peripheriegeräte (1;7) steuert.

18. Fütterungseinrichtung nach Anspruch 17, **gekennzeichnet durch** Meßsonden zur Ermittlung des Einwirkungserfolgs der UV-Strahlenquelle(n), deren Auslaß an den Zentralcomputer angeschlossen ist.

## Claims

1. A feeding arrangement with a feed-mixing container, in particular for liquid feed installations, with a stirring apparatus (4) for the mixing of feed constituents and for the circulation of feed and with a UV radiation source for the feed irradiation, **characterised in that**, for the UV irradiation of the internal surfaces of the container and the surface of any feed that may be present in the feed-mixing container (3), there is provided inside the feed-mixing container (3) at least one UV radiation source (16), which emits UV radiation in the range from approx. 240 to 280 nanometers, has a power consumption of 30 to 40 watts and is provided with a quartz glass protective cover.

2. The feeding arrangement according to claim 1, **characterised in that** several UV radiation sources (16) are provided.

3. The feeding arrangement according to claim 1 or 2, **characterised in that** the UV radiation source(s) (16) is (are) provided in the container lid (17).

4. The feeding arrangement according to any one of claims 1 to 3, **characterised in that** the UV radiation source(s) (16) is (are) provided in the upper region of the container side wall.

5. The feeding arrangement according to any one of claims 2 to 4, **characterised in that** the UV radiation sources (16) are arranged at a regular mutual distance around the vertical centre axis of the container.

6. The feeding arrangement according to any one of claims 1 to 5, **characterised in that** the UV radiation source(s) (16) is (are) movable from an operating position inside the feed-mixing container (3) into a non-operating position at least partially outside of the container interior.

7. The feeding arrangement according to claim 6, **characterised in that** the feed-mixing container (3) is provided, in the wall pass-through area for a UV radiation source (16), with a seal which acts as a stripper when the UV radiation source (16) is moved into its non-operating position.

8. The feeding arrangement according to claim 6 or 7, **characterised in that** a separate cleaning device is assigned to each UV radiation source (16) inside or outside the feed-mixing container (3).

9. The feeding arrangement according to any one of claims 6 to 8, **characterised in that** the UV radiation source(s) (16) is (are) displaceable in the horizontal or vertical direction between the operating and the non-operating position.

10. The feeding arrangement according to any one of claims 1 to 9, **characterised in that** the UV radiation source(s) (16) is (are) encapsulated off from the surroundings by a cover in the operating or non-operating position.

11. The feeding arrangement according to any one of claims 1 to 10, **characterised in that** the UV radiation source (16) is designed as rod-like bodies.

12. The feeding arrangement according to any one of claims 1 to 11, **characterised in that** the UV radiation source(s) (16) emits UV radiation in the range of approx. 254 nanometers.

13. The feeding arrangement according to any one of claims 1 to 12, **characterised in that** the UV radiation source(s) (16) have a power consumption of approx. 36 watts.

14. The feeding arrangement according to any one of claims 1 to 4, **characterised in that** there is arranged downstream of the feed-mixing container (3) a feed through-flow chamber (19), which can be supplied with feed in the through-flow from a conveying line (6) emerging from the bottom zone (5) of the feed-mixing container (3) and provided with a pump (7) and which is provided at least with one UV radiation source (16) active inside the chamber.

15. The feeding arrangement according to claim 14, **characterised in that** the feed through-flow chamber is connected at its discharge side to a conveying line (20), which optionally supplies a return-flow line (21) to the feed-mixing container (3) or a conveying line leading to the consumer locations.

16. The feeding arrangement according to claim 14, **characterised in that** the feed through-flow chamber (19) is connected for feed at a branch hne (23) to the conveying line (6) leading to consumer locations.

17. The feeding arrangement according to any one of claims 1 to 16, **characterised in that** the UV radiation source(s) (16) is (are) controlled by means of a central computer, which also controls the feed-mixing container (3), its components (4) and its peripheral devices (1; 7).

18. The feeding arrangement according to claim 17, **characterised by** measuring probes for determining the success of the action of the UV radiation source(s), the output of which measuring sources is connected to the central computer.

## Revendications

1. Dispositif d'affouragement comportant une cuve mélangeuse de fourrage, en particulier pour des installations de fourrage fluide, un mélangeur-agitateur (4) pour mélanger des particules de fourrage et faire circuler du fourrage et une source de rayons UV pour irradier du fourrage, **caractérisé en ce qu'**au moins une source de rayons UV (16) est prévue à l'intérieur de la cuve mélangeuse (3) de fourrage pour irradier aux UV les surfaces intérieures de la cuve et la surface supérieure de fourrage éventuellement présent dans la cuve mélangeuse (3) de fourrage, laquelle source émet un rayonnement UV dans une plage d'environ 240 à 280 nanomètres, présente une absorption de puissance d'environ 30 à 40 watts et est pourvue d'une coiffe de protection en verre quartzeux.

2. Dispositif d'affouragement selon la revendication 1, **caractérisé en ce que** plusieurs sources de rayons UV (16) sont prévues.

3. Dispositif d'affouragement selon la revendication 1 ou 2, **caractérisé en ce que** la source ou selon le cas les sources de rayons UV (16) est prévue ou sont prévues sur le couvercle (17) de la cuve mélangeuse (3).

4. Dispositif d'affouragement selon l'une quelconque des revendications 1 à 3, **caractérisé en ce que** la source ou selon le cas les sources de rayons UV - (16) est prévue ou sont prévues dans la zone supérieure de la paroi latérale de la cuve mélangeuse (3).

5. Dispositif d'affouragement selon l'une quelconque des revendications 2 à 4, **caractérisé en ce que** les sources de rayons UV (16) sont disposées à distance réciproque régulière autour de l'axe médian vertical de la cuve mélangeuse (3).

6. Dispositif d'affouragement selon l'une quelconque des revendications 1 à 5, **caractérisé en ce que** la source ou selon le cas les sources de rayons UV (16) peut être déplacée ou peuvent être déplacées à partir d'une position de fonctionnement à l'intérieur de la cuve mélangeuse (3) de fourrage dans une position d'arrêt au moins partiellement hors de l'espace intérieur de la cuve mélangeuse (3).

7. Dispositif d'affouragement selon la revendication 6, **caractérisé en ce que** la cuve mélangeuse (3) de fourrage est pourvue d'un joint dans la zone de passage dans la paroi destiné à une source de rayons UV (16), lequel joint agit en tant que racleur lors du déplacement de la source de rayons UV (16) dans sa position d'arrêt.

8. Dispositif d'affouragement selon la revendication 6 ou 7, **caractérisé en ce qu'**un dispositif de nettoyage séparé est associé à chaque source de rayons UV (16) à l'intérieur ou à l'extérieur de la cuve mélangeuse (3) de fourrage.

9. Dispositif d'affouragement selon l'une quelconque des revendications 6 à 8, **caractérisé en ce que** la source ou selon le cas les sources de rayons UV (16) peut être déplacée ou peuvent être déplacées dans le sens horizontal ou vertical entre la position de fonctionnement et la position d'arrêt.

10. Dispositif d'affouragement selon l'une quelconque des revendications 1 à 9, **caractérisé en ce que** la source ou selon le cas les sources de rayons UV (16) peut être protégée ou peuvent être protégées de l'environnement par une coiffe dans la position de fonctionnement ou dans la position d'arrêt.

11. Dispositif d'affouragement selon l'une quelconque des revendications 1 à 10, **caractérisé en ce que** la source de rayons UV (16) est conformée comme un corps allongé.

12. Dispositif d'affouragement selon l'une quelconque des revendications 1 à 11, **caractérisé en ce que** la source ou selon le cas les sources de rayons UV (16) émet ou émettent un rayonnement UV dans une plage d'environ 254 nanomètres.

13. Dispositif d'affouragement selon l'une quelconque des revendications 1 à 12, **caractérisé en ce que** la source ou selon le cas les sources de rayons UV (16) présente ou présentent une absorption de puissance d'environ 36 watts.

14. Dispositif d'affouragement selon l'une quelconque des revendications 1 à 4, **caractérisé en ce qu'**une chambre de passage (19) de fourrage est disposée en aval de la cuve mélangeuse (3) de fourrage, laquelle chambre peut être alimentée en fourrage de passage par une conduite de transport (6), pourvue d'une pompe (7), débouchant de la zone du fond (5) de la cuve mélangeuse (3) de fourrage et est pourvue d'au moins une source de rayons UV (16) agissant à l'intérieur de ladite chambre.

15. Dispositif d'affouragement selon la revendication 14, **caractérisé en ce que** le côté aval de la chambre de passage (19) de fourrage est raccordé à une conduite de transport (20), laquelle alimente au choix une conduite de retour (21) vers la cuve mélangeuse (3) de fourrage ou une conduite de transport conduisant aux endroits d'utilisation.

16. Dispositif d'affouragement selon la revendication 14, **caractérisé en ce que** la chambre de passage (19) de fourrage est raccordée à une conduite de dérivation (23) vers la conduite de transport (6) de fourrage conduisant directement aux endroits d'utilisation.

17. Dispositif d'affouragement selon l'une quelconque des revendications 1 à 16, **caractérisé en ce que** la source ou selon le cas les sources de rayons UV (16) est commandée ou sont commandées au moyen d'un ordinateur central (13), lequel commande également la cuve mélangeuse (3) de fourrage, son mélangeur-agitateur (4) et ses organes périphériques (1; 7).

18. Dispositif d'affouragement selon la revendication 17, **caractérisé par** des sondes de mesure, dont la sortie est raccordée à l'ordinateur central, destinées à déterminer le résultat de l'effet de la source ou selon le cas des sources de rayons UV.
